# EUROPEAN PATENT APPLICATION

(11) **EP 4 257 517 A1**
(43) Date of publication of application: **11.10.2023**
(21) Application number: 22201780.8
(22) Date of filing: 17.10.2022
(51) Int. Cl.: B65G 1/04

(54) **AUTOMATED CONTAINER WAREHOUSE**

(30) Priority: 04.04.2022 KR 20220041764
(71) Applicant: Lee, Wan Young, Seoul 08730 (KR)
(72) Inventor: Lee, Wan Young, Seoul 08730 (KR)
(74) Representative: M. Zardi & Co S.A.

(57) **Abstract**

The present invention relates generally to an automated container warehouse for efficiently storing and managing a large number of containers by using an automatic loading and unloading method, and more particularly to an automated container warehouse that can store containers having a long length and a large load, such as containers for marine transportation, considerably efficiently and stably while having a simple structural form and can also reduce dead space, thereby improving structural stability and constructability and also increasing spatial efficiency.

## Description

### CROSS-REFERENCE TO RELATED APPLICATION

This application claims the benefit of Korean Patent Application No. 10-2022-0041764 filed on April 4, 2022, which is hereby incorporated by reference herein in its entirety.

### BACKGROUND

### 1. Technical Field

The present invention relates generally to an automated container warehouse for efficiently storing and managing a large number of containers by using an automatic loading and unloading method, and more particularly to an automated container warehouse that can store containers having a long length and a large load, such as containers for marine transportation, considerably efficiently and stably while having a simple structural form and can also reduce dead space, thereby improving structural stability and constructability and also increasing spatial efficiency.

### 2. Description of the Related Art

Generally, an automated warehouse is a large-scale storage means for efficiently storing and managing cargo in a minimum space by automatically carrying out incoming and outgoing cargo by an automated facility, and is widely being used in large-scale logistics systems or warehouses at various types of industrial sites.

Such automated warehouses are usually provided with ancillary facilities, including a plurality of racks having a plurality of cargo loading spaces in the front and rear thereof and arranged at regular intervals along the left-right directions, cargo loading and unloading devices such as lifts or stacker cranes for carrying cargo into and out of the loading spaces of the racks while traveling parallel to the racks between adjacent racks, and conveyors for transporting cargo between the warehouse and the outside. The ancillary facilities are automatically controlled by a computer.

Meanwhile, in such an automated warehouse, it is considerably important to secure the structural safety of racks for the stable storage of cargo because it is necessary to simultaneously load and support a large amount of heavy cargo in layers.

Furthermore, each rack of the automated warehouse has a cargo loading space corresponding to the front and rear thereof for easy loading and unloading of cargo and efficient use of space.

Accordingly, racks consist of high-rise steel structures formed of steel materials, such as H-beams, in a lattice form. Since cargo enters and exits from both front and rear sides of each rack, a brace configured to prevent buckling and torsion must be installed in the middle of the width direction of the rack so that it does not interfere with the entry and exit of a container.

Therefore, the racks of the conventionally used automated warehouse are constructed using a method in which a so-called 3- or 4-column rack cargo storage structure in which 3 to 4 columns are arranged in the widthwise direction of each rack in order to ensure structural safety is employed and a brace is locked onto one or two columns located in the middle.

However, in the racks having such a 4- or 3-column structure, one or two more columns need to be installed in the middle of the widthwise direction of each rack to install braces, so that material requirements increase and the number of connections increases. Accordingly, the economic efficiency and constructability of the construction of an automated warehouse highly deteriorate as the material cost and construction cost as well as the construction period increase.

In addition, it is inefficient in terms of space utilization as dead space is generated according to the space occupation of the central columns for hanging the braces.

Therefore, the present applicant has proposed a two-column rack through Korean Patent No. 10-0344326 as a technique for overcoming the problems of the conventional rack.

This technology installs braces at predetermined positions between the columns that are spaced apart in the widthwise directions of the racks, attaches the brackets to the centers of these braces, and fixedly installs both ends of the braces to the two adjacent brace brackets in diagonal directions, thereby ensuring that the racks have a simple structure and high structural stability.

However, this previously registered patented technology is configured such that the brace is installed only between front and rear paired columns, so that it is suitable for the storage of small-length cargo but it cannot guarantee structural stability in the storage of long-length cargo, for example, steel materials such as H beams, steel pipes, steel plates, thick steel plates for shipbuilding, and containers for marine transportation.

In other words, in the case of long cargo, it is inevitable to load it in the left-right direction in terms of the structure of racks and the efficiency of loading and unloading. In this case, the spacing between neighboring columns in the left-right direction becomes considerably wider (the distance between the columns has to be longer than the length of cargo), which increases the distance between the points where both ends of a brace are fixed. Accordingly, the brace is increased, and the possibility of buckling is also increased. Therefore, there is a risk of damaging the structural stability of the automated warehouse.

Therefore, in order to solve this problem, the present applicant has proposed a two-column rack through Korean Patent No. 10-0843308.

The two-column rack includes pluralities of pairs of columns, pairs of connection beams, first and second brace beams, braces, arm beams, and cargo loading beams that are connected to each other in a predetermined form and form a lattice structure.

Through this structure, structural stability is improved and long cargo can be loaded. However, there is a problem in that it is difficult to load containers having a long length and a large load, such as containers for marine transportation, because the transfer fork of a stacker crane has a small space.

In addition, the rack has a structure including the first and second brace beams and the braces. In particular, due to the braces installed at the centers of the widthwise directions of the racks, dead space is inevitable due to its space occupation.

Due to this, the size of the automated warehouse compared to the total amount of loading containers has to be increased, the rack is inefficient in terms of space utilization, and an increase in the installation cost of the automated warehouse is inevitable.

Therefore, there is a demand for the development of an automated container warehouse that can increase the space utilization of the loading space inside the automated warehouse, facilitates installation work, and can provide the optimization of the space of the warehouse.

### SUMMARY

The present invention has been conceived to overcome the above-described problems, and an object of the present invention is to provide an automated container warehouse that can store containers having a long length and a large load, such as containers for marine transportation, considerably efficiently and stably while having a simple structural form.

According to an aspect of the present invention, there is provided an automated container warehouse including a plurality of racks provided with a plurality of container loading spaces and arranged at predetermined intervals along left-right directions, stacker cranes each provided with a carriage having a transfer fork, each installed in a passage between two adjacent racks and configured to carry containers into and out of the container loading spaces of the racks, and transport means configured to transport containers between the inside and outside of the automated warehouse, wherein each of the racks includes:
a plurality of pairs of columns spaced apart from one another at intervals in left-right directions with two columns spaced apart in front-rear widthwise directions forming a pair, wherein the two columns forming a pair are connected in an integrated manner by vertical lattice bars installed between them in a zigzag; container support beams having a beam shape protruding to a left or right side of columns at predetermined heights of the pairs of columns, protruding to a set, and bearing loads of containers to be loaded; post support beams connecting upper ends of the container support beams of the pair of columns to each other, having ends with a protruding beam shape extending according to a setting, and supporting posts of containers to be loaded on tops thereof; and intermediate connection beams connecting container support beams of the pairs of columns adjacent to each other in left-right directions, and having top ends formed at lower heights than the container support beams.

The intermediate connection beams may have a lower height than the container support beams; and the bottom surfaces of the container support beams may be located on the same lines as the bottom surfaces of the intermediate connection beams.

The intermediate connection beams located in the front-rear directions may be connected in an integrated manner by horizontal lattice bars installed in a zigzag form between the intermediate connection beams.

The columns of the pairs of columns may be formed of H beams, and the axes of the webs of the H beams may be arranged in parallel with each other.

The container support beams, the intermediate connection beams, and the post support beams may be formed of H beams, and the axes of the webs of the H beams may be arranged orthogonal to each other.

Each of the transport means may include rails extending from a container waiting space communicating with the outside of the rack to the outside, and a carriage vehicle configured to travel along the rails.

The carriage vehicle may be provided with post supports raised to have a height at both left and right ends or at front and rear left and right four corners, and a space which the transfer fork of the stacker crane can enter and exit under a container may be formed by the post supports.

The post support beams may be further provided with bed plates at positions in contact with posts of containers.

The post support beams may be further provided with post fixing pins protruding upward to be inserted into holes formed in centers of posts of containers at positions where the posts of the containers are to be placed.

The post support beams may be further provided with inverted and reversed "L"-shaped post guide bars surrounding the posts of the containers in order to fix the positions of the posts of the containers.

### BRIEF DESCRIPTION OF THE DRAWINGS

The above and other objects, features, and advantages of the present invention will be more clearly understood from the following detailed description taken in conjunction with the accompanying drawings, in which:
FIGS. 1 to 4 are a schematic perspective view, a plan view, a front view, and a side view, respectively, showing an embodiment of an automated container warehouse according to the present invention;
FIG. 5 is a perspective view showing an excerpt of racks applied to an automated container warehouse according to the present invention;
FIG. 6 is a partially enlarged plan view of a rack applied to an automated container warehouse according to the present invention;
FIG. 7 is a partially enlarged front view of a rack applied to an automated container warehouse according to the present invention;
FIG. 8 is a partially enlarged side view of a rack applied to an automated container warehouse according to the present invention;
FIG. 9 is a view showing an example in which a conventional vertical brace is additionally installed in a rack applied to an automated container warehouse according to the present invention;
FIGS. 10 to 12 are views showing an embodiment of a post support beam installed on a rack applied to an automated container warehouse according to the present invention;

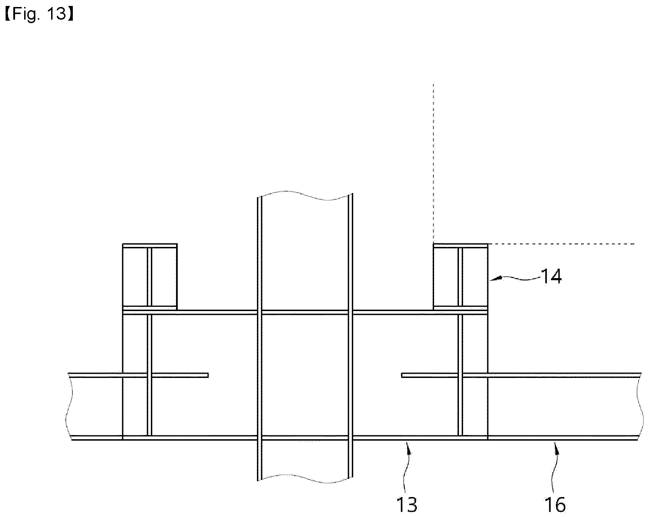

FIG. 13 is an example view showing the position of the lower ends of a container support beam and an intermediate connection beam installed in a rack applied to an automated container warehouse according to the present invention;
FIG. 14 is a schematic view showing the carriage vehicle of a transport means applied to an automated container warehouse according to the present invention;
FIGS. 15 and 16 are views schematically showing the transfer fork of a stacker crane applied to an automated container warehouse according to the present invention;
FIG. 17 is a view showing a state in which intermediate connection beams are omitted from a rack applied to an automated container warehouse according to the present invention; and

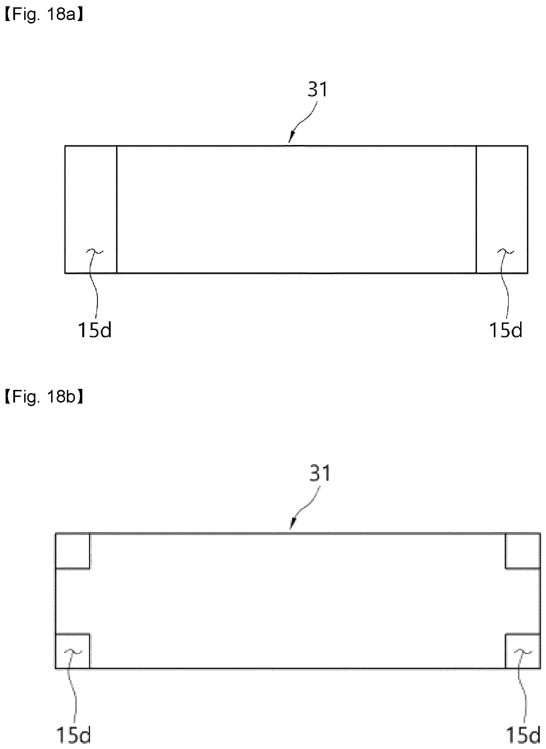

FIGS. 18A and 18B are schematic views showing embodiments of the carriage vehicle according to FIG. 14.

### DETAILED DESCRIPTION

Embodiments of an automated container warehouse according to the present invention will be described in detail below with reference to the accompanying drawings.

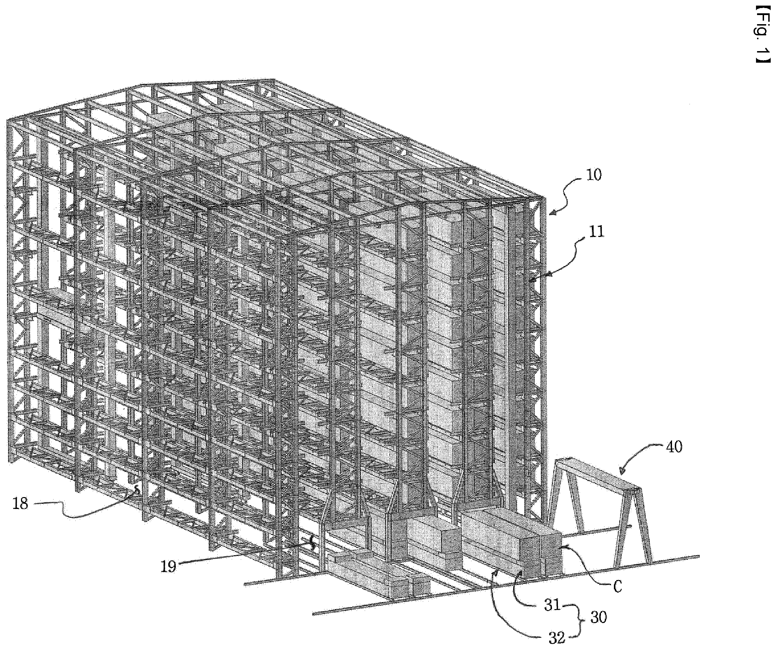

In addition, in the following description of the present invention, the term "upper" or "upward" refers to a portion having a height from the floor where the automated container warehouse is installed or the direction toward the portion, and the term "lower" or "downward" refers to the opposite portion or direction. Furthermore, the term "front" or "forward" refers to the portion or the direction in which the longitudinal direction of a container loaded into the automated container warehouse is visible with reference to FIG. 1, and the term "rear" or "rearward" refers to the opposite portion or direction.

Meanwhile, in the following description of the present invention, detailed descriptions of related known functions or configurations will be omitted in order to prevent the gist of the present invention from being obscured. Furthermore, when a part is described as "including" a component, this means that the part may further include another component, rather than excluding another component, unless otherwise stated. Moreover, it should be noted that the same components in the drawings are denoted by the same reference numbers or symbols as much as possible even when they are shown in different drawings.

As shown in the drawings, in the automated container warehouse according to the present invention, long and heavy containers such as containers C for marine transportation may be easily loaded and stored, and the dead space of the conventional automated warehouse may be reduced, so that structural stability and constructability can be improved and spatial efficiency can be increased.

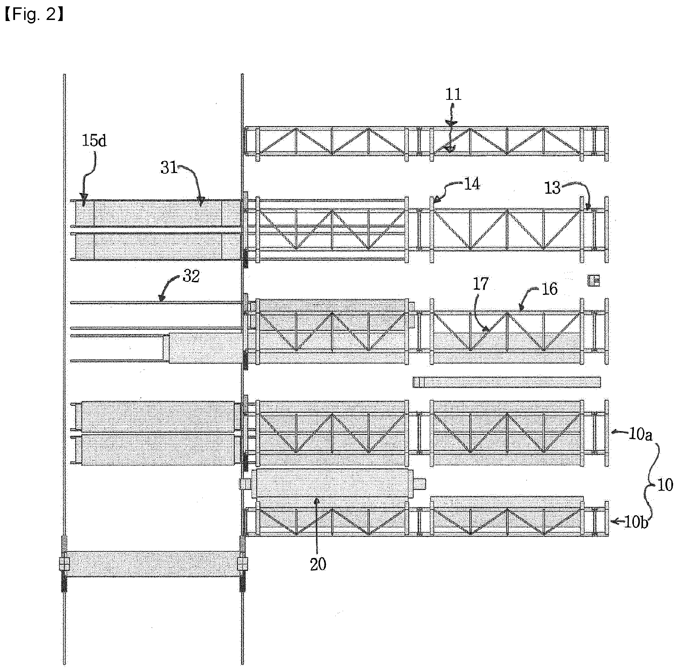

To this end, referring to FIGS. 1 to 4, the automated container warehouse according to the present invention includes: a plurality of racks 10 provided with a plurality of container loading spaces 18 arranged to face each other at predetermined intervals on forward and rearward sides in lateral directions, configured to accommodate and store containers C, and arranged at predetermined intervals along the front-rear widthwise directions; stacker cranes 20 each provided with a carriage 22 having a transfer fork 23, each installed in a passage between two adjacent racks 10, and configured to carry containers C into and out of the container loading spaces 18 of the racks 10; and transport means 30 configured to transport containers C between the inside and outside of the automated warehouse.

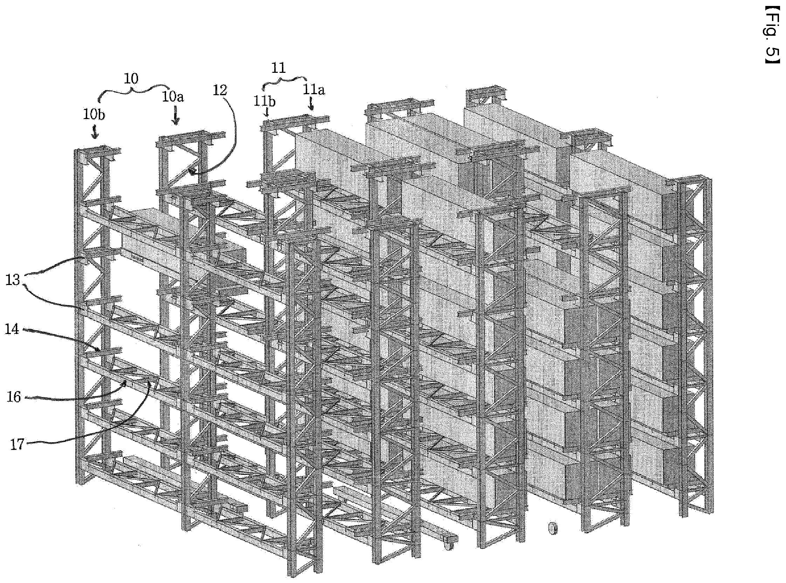

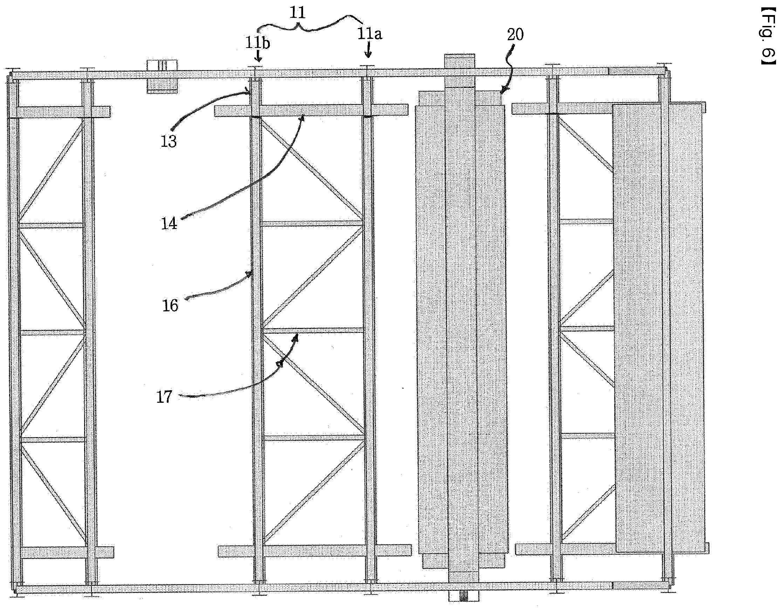

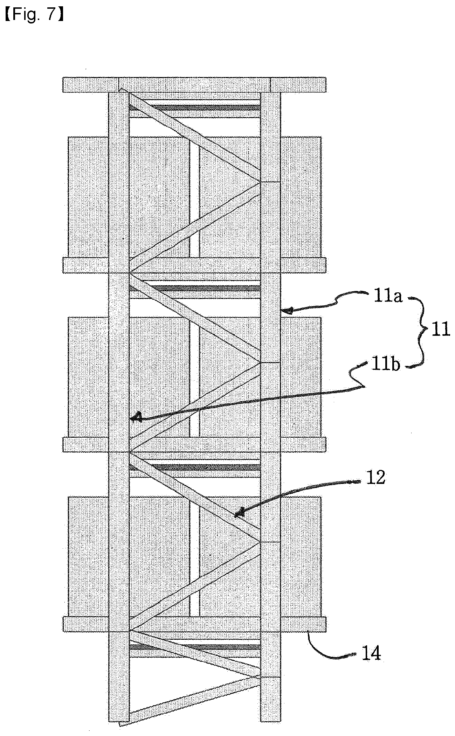

In this case, the racks 10 applied to the present invention have a structure including pluralities of pairs of columns 11, container support beams 13, post support beams 14, and intermediate connection beams 16 that are connected to each other in a predetermined pattern and form a lattice structure, as shown in FIGS. 5 to 8.

First, the pairs of columns 11 are configured such that two columns 11a and 11b spaced apart from each other at a set interval form each pair of columns 11, are spaced apart at predetermined intervals in the front-rear widthwise directions of the racks 10, and are disposed at predetermined intervals in the left-right longitudinal directions of the racks 10.

In addition, the two spaced-apart columns 11a and 11b have a structure in which they are connected in an integrated manner by a plurality of vertical lattice bars 12 arranged in a zigzag form between them.

Preferably, each of the intervals at which the pairs of columns 11 are spaced apart from each other in the left-right longitudinal directions of the racks is configured to be larger than the length of containers C to be loaded.

Meanwhile, the columns 11a and 11b constituting each pair of columns 11 mainly bear vertical load, and are formed of H-beams having excellent structural strength. Since it is necessary to bear the bending moment transmitted from corresponding container support beams 13 to be described later, it is preferable that the axes of the webs of the columns 11a and 11b are installed to be arranged in parallel with corresponding container support beams 13.

In addition, the vertical lattice bars 12 prevent the buckling of the columns 11a and 11b while interconnecting the sides of the front and rear columns 11a and 11b in triangular forms, and serve to resist lateral load.

Thereafter, the container support beams 13 constituting a corresponding rack protrude horizontally from the opposing surfaces of the adjacent two pair of columns 11 into the container loading space 18 by a set length, and support corresponding post support beams 14 to be described later against the pair of columns 11.

More specifically, the container support beams 13 have protruding beam shapes protruding to the left and right of the columns 11a and 11b at predetermined heights of the pair of columns 11, protrude to a set length, and bear the load of loaded containers C.

The container support beams 13 are provided separately for the support of the post support beams 14 by taking into consideration an economical aspect because when the post support beams 14 to be described later are directly installed on the intermediate connection beams 16, the load strength of the intermediate connection beams 16 has to be increased by that much.

Furthermore, it is also intended to secure a predetermined space between the intermediate connection beam 16 and the post support beam 14 so that the transfer fork 23 of the stacker crane 20 can sufficiently enter and exit the container loading space 18 without interfering with the intermediate connection beam 16.

In addition, the post support beams 14 constituting the rack are intended to directly support containers C from the bottoms of the containers C by allowing the containers C to be placed on tops thereof. The post support beams 14 are horizontally and fixedly installed along the front-rear directions in order to intersect the container support beams 13 on tops of the front ends of the container support beams 13 protruding from the front and rear columns 11a and 11b of the pair of columns 11.

In other words, the tops of the front ends of the container support beams 13 of the pair of columns 11 are connected to each other, the ends of the container support beams 13 have protruding beam shapes protruding according to a setting, and the container support beams 13 support the posts of containers C loaded on tops thereof.

These post support beams 14 have their ends protruding from the fronts and rears of the container support beams 13 by a predetermined length, thereby securing the wider front and rear container loading space 18 of the rack 10 having a forward and backward bidirectional entry/exit structure.

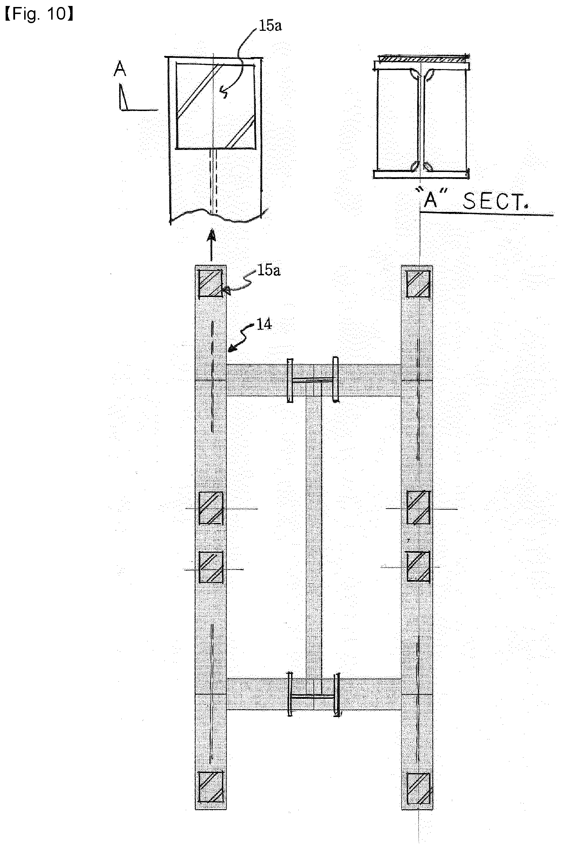

Meanwhile, the post support beams 14 support the posts of containers C at the four corners of the containers C on tops thereof. In order to protect steel surfaces and mitigate impacts when containers C are loaded, bed plates 15a are further installed at the positions where the posts of the containers are placed. In addition, it is preferable to further provide a soft material having a high coefficient of friction and desired adhesion, such as rubber or urethane, on tops of the bed plates 15a so that sliding can be suppressed as much as possible (see FIG. 10).

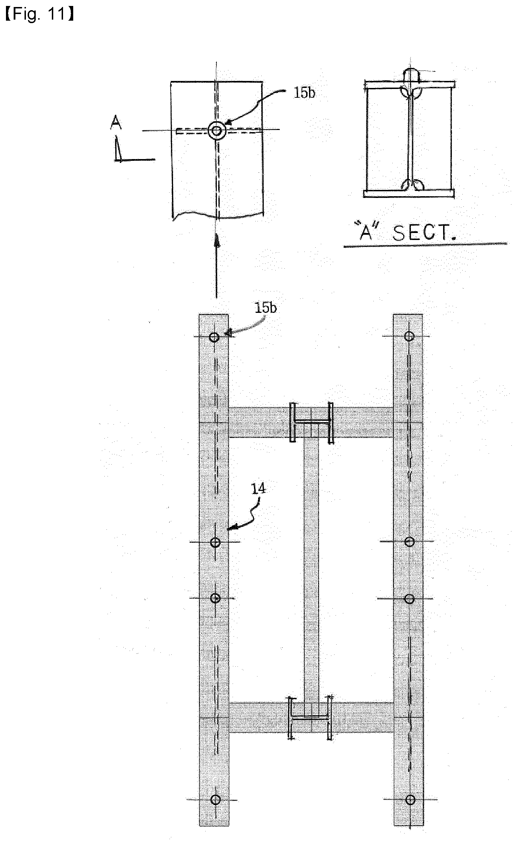

Meanwhile, as another example, post fixing pins 15b protruding upward may be installed on tops of the post support beams 14 so that the post fixing pins 15b can be inserted into holes formed in the centers of the posts at the four corners of the containers C and fix the positions of the containers C (see FIG. 11).

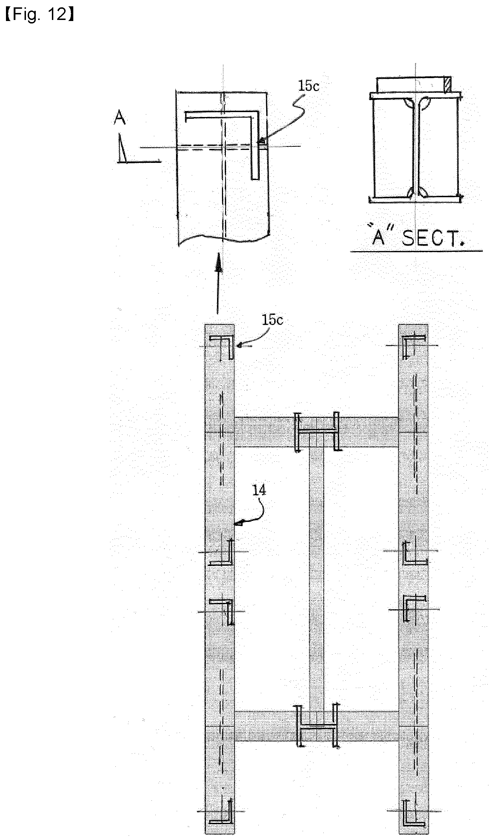

Meanwhile, as another example, inverted and reversed "L"-shaped post guide bars 15c each formed to protrude upward in a shape surrounding two outer surfaces of a corresponding post may be installed on the post support beams 14 so that the positions of containers C can be fixed at the positions of the posts at the four corners of the containers C on tops of the shaped post guide bars 15c (see FIG. 12).

It is obvious that the above-described bed plates 15a, the post fixing pins 15b, and the post guide bars 15c may be used individually or together as needed.

Thereafter, the intermediate connection beams 16 constituting the rack connect the container support beams 13 of the pair of columns 11 adjacent to each other in the left-right directions, and have upper ends at a lower height than the upper ends of the container support beams 13.

In other words, the intermediate connection beams 16 are arranged horizontally with a distance between the pair of two columns 11 adjacent to each other in the left-right directions. The intermediate connection beams 16 connect the columns by connecting the opposite, parallel container support beams 13 of the pair of two columns 11.

In this case, preferably, a plurality of horizontal lattice bars 17 is further installed between the two intermediate connection beams 16 in a zigzag form and connects the two intermediate connection beams 16 in an integrated manner.

These intermediate connection beams 16 are intended to prevent the lateral buckling of the columns 11a and 11b while supporting horizontal load, are disposed at regular vertical intervals between the pair of two neighboring columns 11, and form the container loading spaces 18 of the rack 10 along with the pair of columns 11.

In addition, the horizontal lattice bars 17 prevent the distortion of the rack 10 by securing the horizontal rigidity of the rack 10 while integrating the front and rear intermediate connection beams 16.

Meanwhile, the intermediate connection beams 16 constituting the rack in the automated container warehouse according to the present invention are formed such that they have the same level as the container support beams 13 in terms of the bottom surfaces thereof, i.e., such that the bottom surfaces of the container support beams 13 and the bottom surfaces of the intermediate connection beams 16 are located on the same lines. Furthermore, the intermediate connection beams 16 are formed of members having a height lower than that of the container support beams 13.

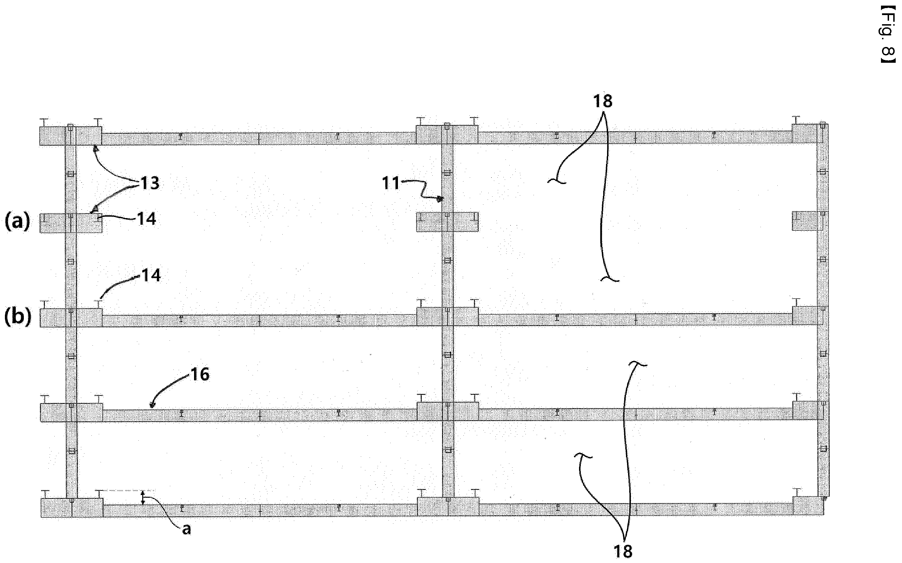

Accordingly, in the automated container warehouse according to the present invention, the upper ends of the intermediate connection beams 16 are installed to be lower than the upper ends of the container support beams 13, and form spaces 'a' between them and the post support beams 14 on which containers C are seated and loaded, so that spaces for transporting containers are obtained under the containers to be loaded (see FIG. 8).

In addition, since the intermediate connection beams 16 applied to the present invention are supported by the container support beams 13 and have to bear bending moment attributable to horizontal load, they are formed of H-beams having high bending resistance and are preferably installed such that the axes of the webs are vertical.

Meanwhile, since the intermediate connection beams 16 are supported by the container support beams 13 and have to bear bending moment attributable to horizontal load, parts may be omitted at positions where the horizontal load is low and also the beam 14 may be lowered to the same height as the container support beam 13 and then installed in order to reduce the warehouse installation cost and reduce the height of stepped parts.

In other words, in positions where some of the intermediate connection beams 16 are unnecessary because the horizontal load acting on the rack 10 is low, the intermediate connection beams 16 may be omitted and also the post support beams 14 may be installed to be low at the same height as the container support beams 13 in order to reduce the installation cost of the automated warehouse and reduce the height of the steps (see FIG. 8(A)).

Meanwhile, in an area having a significantly high seismic load or a significantly high wind load, vertical braces 50, which correspond to a conventional technology, may be additionally installed and share parts of the horizontal load.

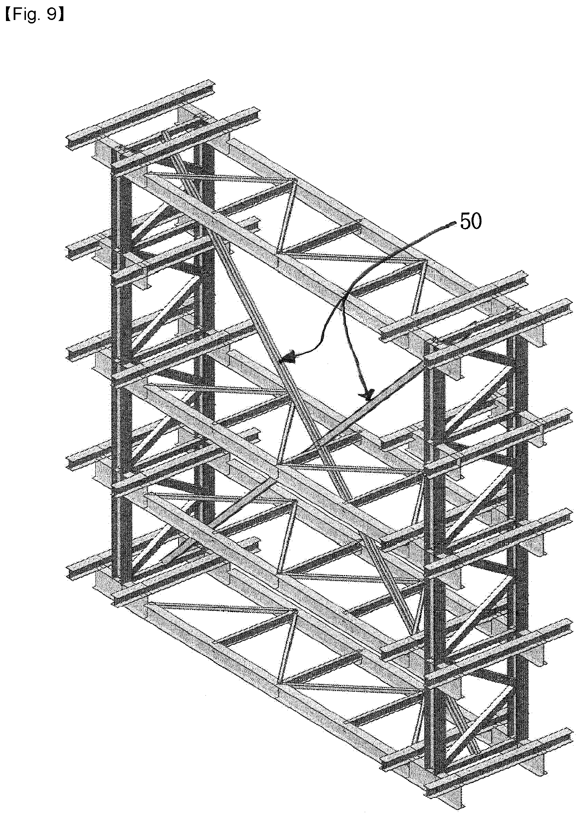

In other words, if necessary, when the horizontal load acting on the rack 10 is high, it is obvious that the vertical braces 50 may be additionally installed such that they can bear parts of the horizontal load (see FIG. 9).

The automated container warehouse according to the present invention will be described again with reference to the accompanying drawings.

Referring to FIG. 5, the racks 10b located at the outermost sides of the plurality of racks 10 applied to the automated container warehouse of the present invention are different from the racks 10a located in the middle of the plurality of racks 10 in that a container C is carried into and out of only one side of each of them. The outer racks 10b are configured to have a smaller front and rear width than the intermediate racks 10a.

In this case, preferably, the post support beams 14 installed on the outer racks 10b have a shape extending only in the spatial direction (toward the inside of the warehouse) in which the container loading space 18 is formed.

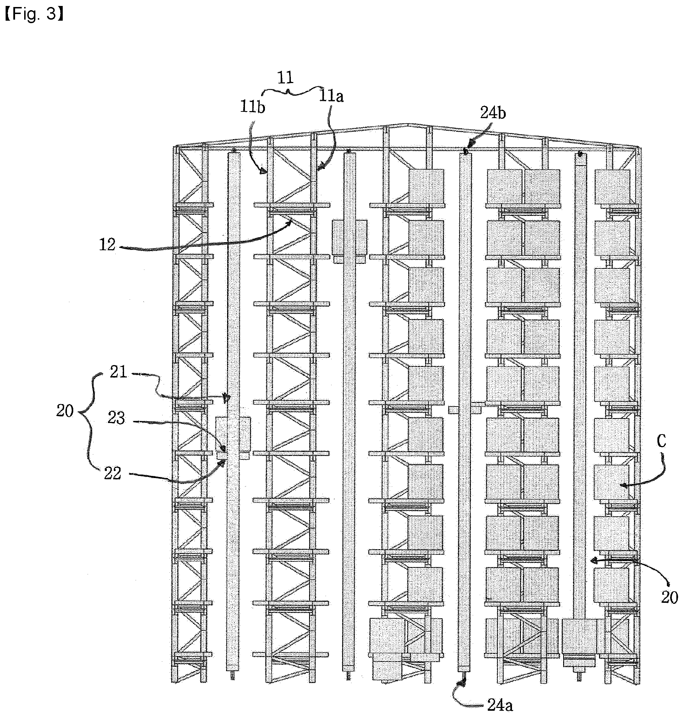

Next, the stacker crane 20 applied to the automated container warehouse according to the present invention is provided with the carriage 22 having the transfer fork 23 as described above, is installed between adjacent racks, and carries a container C into and out of the container loading space 18 (see FIG. 3).

In a specific embodiment, the stacker crane 20 is installed in the space between the racks 10, and moves along the rails 24a and 24b provided on the floor and the ceiling along the longitudinal direction of the rack 10, and is configured such that the carriage 22 elevates up and down along the mast 21.

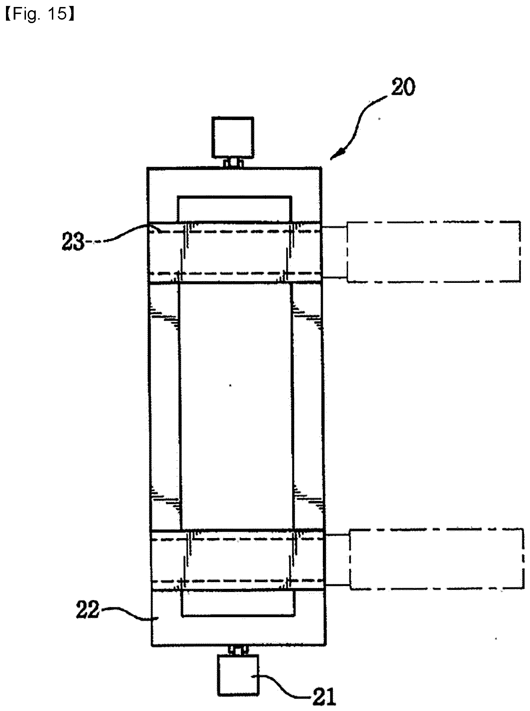

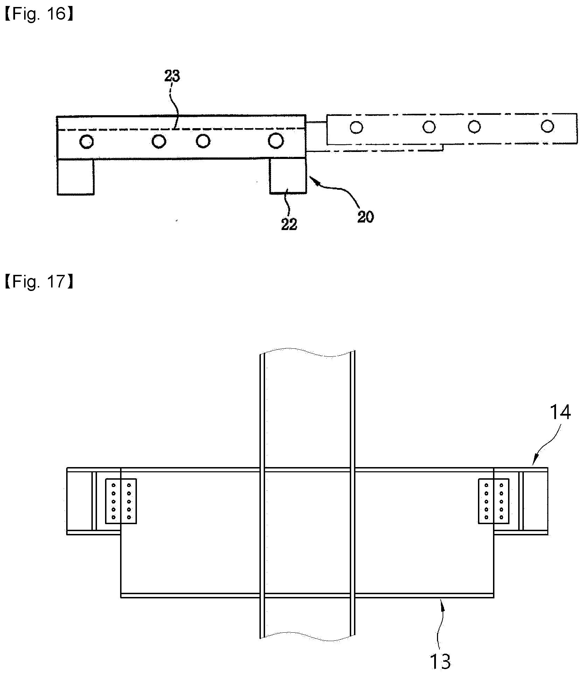

In addition, as shown in FIGS. 15 and 16, the carriage 22 has a structure in which the transfer fork 23 for lifting a container C, placing it on the post support beam 14 of the rack 10 and lowering it is movable to the left and the right by a driving means (not shown).

Preferably, two transfer forks 23 are provided and arranged at intervals in the longitudinal direction of a container C to be loaded. The reason for this is to more stably transfer and move a long container C such as a container for marine transportation.

In this case, it is preferable that the distance between the centers of the two transfer forks 23 is 1/2 or more of the length of containers C. The reason for this is to secure a sufficient support space for stability, for example, when another transport machine such as a transfer carrier or a forklift transfers a container C to the stacker crane 20 in the central part of the container C.

Meanwhile, referring again to FIGS. 1 to 4, as described above, the automated container warehouse according to the present invention includes a transport means 30 for transporting containers between the inside and outside of the automated warehouse.

In addition, among the outermost container loading spaces 18 located at one or more ends in the longitudinal direction of the rack 10, one container loading space 18 communicating with the outside of the warehouse functions as a container waiting space 19 through which the stacker crane 20 carries containers C into and out of the warehouse.

Accordingly, the transport means 30 for transporting the container C between the inside and outside of the warehouse extends to the inside of the container waiting space 19 of each rack 10.

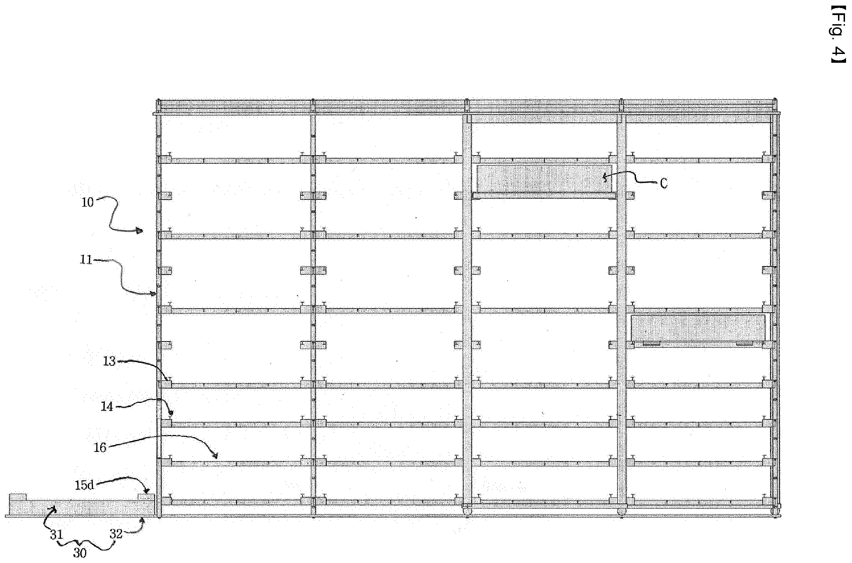

A variety of means may be used as the transport means 30 applied to the present invention. For example, referring to FIG. 4, the transport means 30 may include rails 32 extending from the container waiting space 19 communicating with the outside of the rack 10 to the outside, and a carriage vehicle 31 configured to travel along the rails 32.

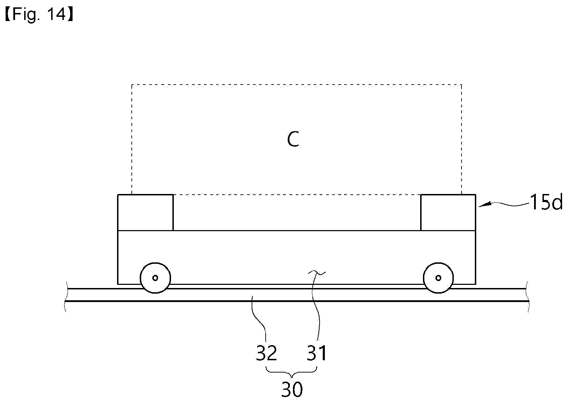

In this case, preferably, the carriage vehicle 31 is provided with post supports 15d that are raised to have a height at both left and right ends or at front and rear left and right four corners. A space which the transfer fork 23 of the stacker crane 20 can enter and exit under a container C is formed by the post supports 15d (see FIG. 14).

As described above, according to the automated container warehouse of the present invention, in the configuration of the racks 10, by taking into consideration the fact that the load is concentrated on the container support beams 13 that support long and heavy containers C for marine transportation, the intermediate connection beams 16 connecting the container support beams 13 facing each other in the left-right directions are installed to be lower than the container support beams 13, and a transfer space which the transfer fork 23 of the stacker crane 20 can enter and exit under a container to be loaded.

Accordingly, the structural safety, reliability, and constructability of the automated container warehouse as well as spatial efficiency may be improved by securing the transfer spaces without intentionally increasing the height of the container loading spaces 18.

Furthermore, since the two transfer forks 23 of the stacker crane 20 for carrying in and out a container C are arranged to be spaced apart from each other on the left and right sides of the carriage 22, they can carry and transfer even a long container C significantly stably.

Meanwhile, a space which the transfer forks of the stacker crane enter and exit is formed by installing the post supports 15d raised to have a height on the ends of the carriage vehicle 31 of the transport means 30, so that a container C can be stably transported, loaded, and stored.

Accordingly, the present invention can secure the structural stability of each rack while having a simple structure having two columns arranged in the widthwise direction, and can remove the braces installed at the center of each rack in the widthwise direction, thereby reducing dead space.

The above-described automated container warehouse according to the present invention provides the following effects:
First, the high container support beams and the small intermediate connection beams connecting them are separately provided by taking into consideration the fact that the load is concentrated on the container support beams supporting long and heavy containers, thereby improving stability and economic efficiency.
Second, the effect of securing the space for transporting a container under a loaded container is achieved by placing the post support beams on tops of the container support beams and installing the intermediate connection beams to be lower than the container support beams.
Third, the transfer forks of the stacker crane for loading and unloading containers include two transfer forks and are spaced apart from each other on the left and right sides, so that an effect is achieved in that even long containers can be transported and transferred very stably.
Fourth, the effect of stably transporting, loading, and storing containers is achieved by forming a space for the transfer forks of the stacker crane to enter and exit by installing the post supports having a height on the ends of the carriage vehicle of the transport means.
Fifth, it is possible to secure the structural stability of the rack while having a simple structure having two columns arranged in widthwise directions, and it is possible to remove the braces installed in the centers of the racks in the widthwise directions, so that dead space can be reduced, with the result that there can be achieved the effect of improving the structural safety, reliability, and constructability of the automated container warehouse, as well as the effect of being significantly advantageous in terms of spatial efficiency and economics.

The present invention described above is not limited to the above-described embodiments and the accompanying drawings because various substitutions and modifications may be made by those of ordinary skill in the art to which the invention pertains within the scope of the present invention.

## Claims

1. An automated container warehouse comprising a plurality of racks provided with a plurality of container loading spaces and arranged at predetermined intervals along left-right directions, stacker cranes each provided with a carriage having a transfer fork, each installed in a passage between two adjacent racks and configured to carry containers into and out of the container loading spaces of the racks, and transport means configured to transport containers between an inside and outside of the automated warehouse, wherein each of the racks comprises:
a plurality of pairs of columns spaced apart from one another at intervals in left-right directions with two columns spaced apart in front-rear widthwise directions forming a pair, wherein the two columns forming a pair are connected in an integrated manner by vertical lattice bars installed between them in a zigzag;
container support beams having a beam shape protruding to a left or right side of columns at predetermined heights of the pairs of columns, protruding to a set, and bearing loads of containers to be loaded;
post support beams connecting upper ends of the container support beams of the pair of columns to each other, having ends with a protruding beam shape extending according to a setting, and supporting posts of containers to be loaded on tops thereof; and
intermediate connection beams connecting container support beams of the pairs of columns adjacent to each other in left-right directions, and having top ends formed at lower heights than the container support beams.

2. The automated container warehouse of claim 1, wherein:
the intermediate connection beams have a lower height than the container support beams; and
bottom surfaces of the container support beams are located on same lines as bottom surfaces of the intermediate connection beams.

3. The automated container warehouse of claim 1, wherein the intermediate connection beams located in front-rear directions are connected in an integrated manner by horizontal lattice bars installed in a zigzag form between the intermediate connection beams.

4. The automated container warehouse of claim 1, wherein columns of the pairs of columns are formed of H beams, and axes of webs of the H beams are arranged in parallel with each other.

5. The automated container warehouse of claim 1, wherein the container support beams, the intermediate connection beams, and the post support beams are formed of H beams, and axes of webs of the H beams are arranged orthogonal to each other.

6. The automated container warehouse of claim 1, wherein each of the transport means comprises rails extending from a container waiting space communicating with an outside of the rack to an outside, and a carriage vehicle configured to travel along the rails.

7. The automated container warehouse of claim 6, wherein the carriage vehicle is provided with post supports raised to have a height at both left and right ends or at front and rear left and right four corners, and a space which the transfer fork of the stacker crane can enter and exit under a container is formed by the post supports.

8. The automated container warehouse of claim 1, wherein the post support beams are further provided with bed plates at positions in contact with posts of containers.

9. The automated container warehouse of claim 1 or 8, wherein the post support beams are further provided with post fixing pins protruding upward to be inserted into holes formed in centers of posts of containers at positions where the posts of the containers are to be placed.

10. The automated container warehouse of claim 1 or 8, wherein the post support beams are further provided with inverted and reversed "L"-shaped post guide bars surrounding the posts of the containers in order to fix positions of the posts of the containers.
